# FASCICULE DE BREVET EUROPEEN

(11) **EP 0 899 973 B1**
(45) Date de publication et mention de la délivrance du brevet: **01.06.2005**
(21) Numéro de dépôt: 98402098.2
(22) Date de dépôt: 24.08.1998
(51) Int. Cl.: H04Q 7/22

(54) **Terminal téléphonique à carte d'identification d'abonné**
Telekommunikationsendgerät mit Teilnehmerleitungskarte
Telephone with subscriber identity card

(30) Priorité: 25.08.1997 FR 9710601
(43) Date de publication de la demande: 03.03.1999
(73) Titulaire: ALCATEL, 75008 Paris (FR)
(72) Inventeur: Hubbe, Pascal, 75014 Paris (FR); Orsini, Christian, 92310 Sevres (FR)
(74) Mandataire: Feray, Valérie

(56) Documents cités:
- EP-A- 0 555 992
- EP-A- 0 562 890
- EP-A- 0 675 659
- EP-A- 0 748 135
- EP-A- 0 789 500
- WO-A-95/06996
- WO-A-96/27270
- GB-A- 2 296 801

## Description

L'invention concerne les terminaux radiotéléphoniques, notamment portatifs, à carte d'identification d'abonné et plus particulièrement ceux qui sont prévus pour recevoir des commandes envoyées par un fournisseur de services dans des messages courts transmis par voie radiotéléphonique en particulier pour mise à jour.

Vu la rapidité d'évolution existant notamment dans les domaines mettant en oeuvre des moyens informatiques, il est utile que les appareils exploités par les utilisateurs puissent être mis à jour, si besoin est.

Par ailleurs, certains procédés d'exploitation des terminaux à carte d'identification d'abonné sont susceptibles d'impliquer des mises à jour s'échelonnant dans le temps d'informations enregistrées dans les cartes au profit de leurs utilisateurs. Ces mises à jour concernent par exemple des informations d'annuaire qui sont stockées dans les cartes d'identification d'abonné destinées aux terminaux radiotéléphoniques et qui sont d'un intérêt particulier pour une catégorie donnée d'utilisateurs de terminaux, telles des informations d'annuaire intéressant des membres d'une même société. De telles mises à jour échelonnées dans le temps interviennent aussi lorsque les cartes sont exploitées pour des opérations de prépaiement qui impliquent un stockage préalable d'unités de paiement au niveau des cartes et un rechargement de telles unités dans une carte lorsque les unités stockées ont été dépensées.

On connaît notamment par le document FR-A-2718263 un dispositif de chargement automatique auquel il est prévu de venir connecter des terminaux pour permettre la mise à jour de leur logiciel de commande. Une telle solution, susceptible de convenir dans certaines conditions d'exploitation des terminaux, n'est pas nécessairement pratique lorsque les terminaux sont susceptibles d'être très dispersés géographiquement. Elle n'est efficace que si les utilisateurs peuvent trouver un dispositif de chargement à portée raisonnable et si les conditions d'utilisation d'un tel dispositif leur paraissent acceptables.

On connaît aussi par le document EP-A-478231, une solution pour programmer rapidement et efficacement un terminal radiotéléphonique en exploitant des signaux transmis par voie radio au récepteur radio de ce terminal depuis un centre de commande suite à la mise de ce terminal dans un mode de programmation par l'utilisateur pour obtention de codes d'autorisation de service de mobile spécifiques. Cette obtention est subordonnée à une action d'appel du centre de commande par l'utilisateur dans au moins deux des exemples proposés. Si une telle solution est susceptible de convenir dans le cas d'une mise en service ou éventuellement d'une demande de mise à jour à l'initiative d'un utilisateur, elle n'est pas totalement satisfaisante, lorsque l'utilisateur ne sait pas qu'une mise à jour de son terminal est nécessaire ou avantageuse pour lui.

Il est par ailleurs connu qu'il est possible de transmettre aux terminaux radiotéléphoniques à carte d'identification d'abonné à processeur et mémoire et notamment aux terminaux de type dit GSM ,des commandes ainsi que des informations à afficher par l'intermédiaire du réseau radiotéléphonique par une procédure dite de transmission par messages courts dénommés SMS en langue anglaise. Les informations sont destinées à être affichées par le terminal et les commandes sont destinées à un processeur qui est par exemple celui de la carte. Ceci peut donc être exploité pour assurer les nécessaires mises à jour des cartes et par leur intermédiaire des terminaux, via le réseau radiotéléphonique, dès qu'existe une liaison établie par voie radiotéléphonique entre un terminal d'un réseau et ce réseau. La structure de commande que comporte ce réseau est en effet susceptible d'être organisée pour savoir si un terminal en liaison avec ledit réseau dispose ou non de la ou des mises à jour qu'il doit avoir. Il devient alors possible d'assurer des mises à jour automatiques des terminaux d'un réseau dès entrée en liaison de ces terminaux avec le réseau et cela en fonction des mises à jour entrées en service. De ces terminaux sont divulgués dans EP 0 789 500 et EP 0 748 135.

Une telle solution n'est toutefois pas sans inconvénient dans la mesure où les terminaux radiotéléphoniques qui sont équipés de cartes d'identification d'abonné à microprocesseur et mémoire telles que commercialisées actuellement ne prennent généralement en compte que les informations qui sont présentes lors de la mise en marche des terminaux qu'elles équipent respectivement. Ceci peut être très gênant pour les utilisateurs qui sont susceptibles de disposer d'informations affichées qui ne correspondent pas à la situation présente du terminal qui les affichent. A titre d'exemple si la carte d'identification d'abonné d'un terminal assure le stockage d'unités de prépaiement et si l'utilisateur a réalisé une opération de rechargement en unités de prépaiement par l'intermédiaire de son terminal, il est possible que le nombre d'unités de prépaiement qu'il peut visualiser par l'intermédiaire dudit terminal après rechargement soit toujours celui qui était à afficher avant rechargement, si son terminal a été maintenu en marche.

De même des informations d'annuaire affichées par un terminal peuvent être inexactes et donc conduire à des erreurs si une mise à jour effectuée au niveau de la carte d'identification d'abonné par voie radio a eu lieu alors que le terminal était déjà en marche.

L'invention propose donc un terminal radiotéléphonique prévu pour coopérer avec une carte d'identification d'abonné, usuellement amovible, qui comporte des premiers moyens de type mémoire exploités par le terminal en tant que mémoire auxiliaire externe, ledit terminal comportant lui-même de seconds moyens de type mémoire et des troisièmes moyens pour transférer des données des premiers moyens aux seconds moyens, ladite carte comportant des quatrièmes moyens lui permettant d'exécuter des commandes de mise à jour, relatives à des données contenues dans les premiers moyens, qui sont transmises sous forme de données par messages courts et par voie radiotéléphonique au terminal, et des cinquièmes moyens pour éliminer les données correspondant aux commandes contenues dans les messages courts reçus lorsque ces commandes ont été exécutées.

Selon une caractéristique de l'invention le terminal comporte également des sixièmes moyens pour détecter si des données ont été éliminées d'un court message par la carte d'identification d'abonné et des septièmes moyens pour déclencher les troisièmes moyens pour un transfert de données lorsqu'une détection d'élimination de données a été effectuée par les sixièmes moyens.

L'invention, ses caractéristiques et ses avantages sont précisés dans la description qui suit en liaison avec les figures évoquées ci-dessous.
La figure 1 présente un schéma de principe relatif à un système permettant de transmettre des commandes par radio à des terminaux radiotéléphoniques à carte d'identification.
La figure 2 présente le format d'un message court de transmission de commande par voie radiotéléphonique.
La figure 3 présente un schéma d'un terminal radiotéléphonique à carte d'identification d'abonné modifié selon l'invention.

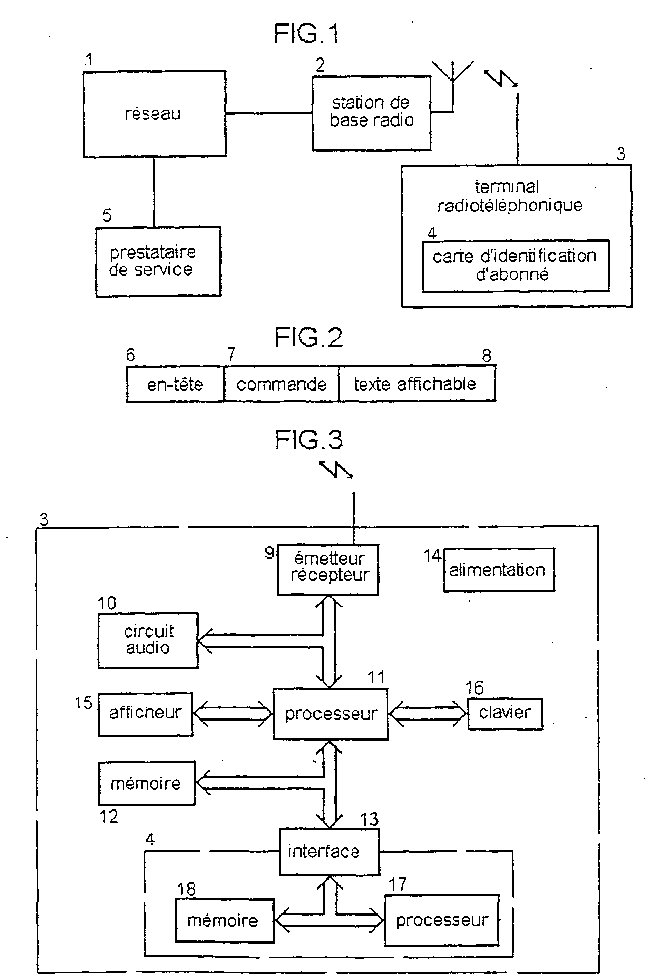

Le système présenté sur la figure 1 est supposé être constitué autour d'un réseau de télécommunications 1, au moins partiellement radiotéléphonique, qui comporte une pluralité de stations radiotéléphoniques de base , usuellement fixes qui sont symbolisées par la station de base 2 et qui sont destinées à servir de relais de communication à des terminaux radiotéléphoniques, symbolisés par le terminal 3, pour les communications des utilisateurs de ces terminaux avec des correspondants téléphoniques ou radiotéléphoniques distants par l'intermédiaire du réseau. Les terminaux radiotéléphoniques 3 sont supposés être prévus pour être équipés chacun d'une carte individuelle d'identification d'abonné 4 pour pouvoir être exploités. Ces cartes sont par exemple des cartes SIM (subscriber identity module en anglais) qui viennent se loger dans les terminaux où elles se connectent à des fins de transmission. Comme il est connu, chaque carte d'identification d'abonné 4 est supposée comporter des moyens de traitement de données numériques, classiquement constitués par un microprocesseur programmable et dûment programmé, et des moyens de type mémoire associés au processeur dans la carte.

Chaque terminal radiotéléphonique est supposé comporter des moyens d'interface pour échanger des données avec une carte d'identification d'abonné comportant des moyens d'interface complémentaires. Il comporte lui-même des moyens de traitement de données et des moyens de type mémoire susceptibles de coopérer avec les moyens correspondants d'une carte. Un équipement d'émission-réception radiotéléphonique permet à chaque terminal de communiquer avec les stations de base radiotéléphoniques à portée radio desquelles il est situé et notamment de mettre en relation les moyens de traitement et les moyens de type mémoire que comporte la carte d'identification qui l'équipe et ceux qu'il comporte lui-même avec le réseau de télécommunications 1. Ceci permet la mise en communication de ce terminal avec d'autres terminaux téléphoniques ou radiotéléphoniques par 'l'intermédiaire du réseau de télécommunications 1 et notamment la mise en communication de ce terminal avec le prestataire de service par l'intermédiaire duquel il a directement ou indirectement obtenu la carte d'identification d'abonné qu'il utilise, ce prestataire de services étant supposé relié au réseau de télécommunication par au moins une unité communicante 5. Il est ici prévu que cette unité communicante est agencée pour pouvoir envoyer des commandes notamment de mise à jour à des terminaux radiotéléphoniques sous la forme de données numériques incluses dans des messages radiotéléphoniques courts que le réseau de télécommunications 1 et plus particulièrement les stations de base 2 de ce réseau se chargent de transmettre.

Les terminaux radiotéléphoniques concernés sont par exemple les terminaux des réseaux désignés par les initiales GSM, DCS ou PCS qui sont équipés de cartes dites SIM disposant de moyens de filtrer les informations qu'elles reçoivent par voie hertzienne notamment dans le cadre de messages courts dits SMS de classe 2. Comme le montre la figure 2, les messages courts de commande sont ici supposés comporter un première partie dit d'en-tête 6 où est notamment identifié le destinataire, d'une seconde partie 7 où les données de commande et en particulier les données de commande de mise à jour sont placées et d'une troisième partie 8 où sont placées des données destinées à être affichées sur l'écran de visualisation qu'est supposé comporter le terminal.

Selon l'invention et comme illustré sur la figure 3, le terminal radiotéléphonique 3 équipé d'une carte d'identification d'abonné 4, tels qu'évoqués ci-dessus, est conçu pour assurer que les données affichées par l'écran de visualisation que ce terminal comporte sont à jour, même si une modification les concernant vient d'être réalisée par la carte à réception par le terminal d'un message court.

A cet effet des moyens supplémentaires sont incorporés dans le terminal qui comporte déjà divers autres moyens partiellement évoqués ci-dessus.

Le terminal radiotéléphonique 3 comporte en particulier un équipement d'émission-réception 9 par l'intermédiaire duquel sont transmis les divers signaux échangés par voie hertzienne entre ce terminal et une station de base 2 avec laquelle il est en communication et en particulier les messages courts que cette station est susceptible de lui transmettre. Cet équipement d'émission-réception est relié à un circuit audio 10 assurant au moins une partie du traitement des signaux correspondants à des sons à émettre radiotéléphoniquement et de ceux à convertir sous forme sonore au profit de l'utilisateur, il est aussi relié à des moyens de traitement 11 constitués autour d'au moins un processeur dûment programmé susceptible lui aussi d'assurer une partie du traitement des signaux émis ou reçus.

Des moyens 12, de type mémoire sont associés aux moyens de traitement dans le terminal, ils comportent en particulier des éléments tampons, non représentés, où viennent s'enregistrer les messages courts, tels que les messages SMS de classe 2 évoqués ci-dessus, qui sont destinés à être transmis à la carte d'identification d'abonné 4 que comporte le terminal, lorsqu'ils contiennent des commandes destinées à être prises en compte par cette carte. Comme indiqué plus haut, ces commandes peuvent notamment être destinées à assurer un rechargement d'unités de prépaiement stockées en mémoire de carte ou une mise à jour d'annuaire lorsque les données correspondantes sont elles aussi stockées en mémoire de carte.

En effet, comme il est connu, les cartes d'identification comportent des moyens de type mémoire qui sont susceptibles d'être exploités comme une mémoire externe par les moyens de traitement 11 des terminaux. Comme il est également connu, ceci permet à un utilisateur détenteur d'une carte d'identification d'abonné d'utiliser des terminaux différents en exploitant les données enregistrées dans cette carte à partir du moment où il déplace sa carte, usuellement amovible de manière simple, de terminal en terminal, suivant ses besoins.

Pour ses échanges avec une carte d'identification, un terminal 3 comporte des moyens d'interface 13 qu'il partage avec la carte pour leurs échanges de données sous une forme qui est usuellement électrique par l'intermédiaire d'organes de connexion non représentés. Pour mémoire, le terminal comporte aussi une source d'alimentation en énergie 14 par l'intermédiaire de laquelle il alimente ses composants et ceux de la carte, un afficheur 15 et un clavier 16 d'interface pour l'utilisateur.

Une carte d'identification d'abonné comporte essentiellement des moyens de traitement 17, classiquement réalisés sous la forme d'un microprocesseur dûment programmé auquel sont associés des moyens 18 de type mémoire dont au moins certains sont accessibles depuis un terminal 3 par l'intermédiaire d'une interface d'accès 13 alors communément partagée, comme connu et comme indiqué plus haut.

Lorsqu'un message court, tel qu'évoqué ci-dessus, incluant des données de commande destinées à la carte d'identification d'abonné 4 équipant un terminal 3, est radiotéléphoniquement reçu, les moyens de traitement 11 de ce terminal déclenchent le stockage du message dans les éléments tampons, évoqués plus haut, des moyens 12 de type mémoire du terminal et un transfert du message à la carte 4 par l'intermédiaire de l'interface d'accès 13.

Les moyens de traitement 17 de la carte 4 assurent la mise en oeuvre des commandes contenues dans le message court qu'elles ont reçu ce qui conduit à l'élimination des données correspondant à ces commandes du message court dont elle faisait partie. Seules la partie d'en-tête 6 et la partie 8 contenant les données destinées à l'affichage sur l'afficheur 15 du terminal 3 subsistent alors dans le message court que contiennent les moyens 18 de type mémoire de la carte.

Le terminal 3 comporte au niveau de ses moyens de traitement 11 des moyens logiciels qui lui permettent de récupérer les parties 6 et 8 du message court pris en compte par la carte pour afficher la partie 8 sur l'afficheur 15.

Il est donc prévu d'ajouter des moyens logiciels et/ou matériels aux moyens de traitement 11 pour détecter si des données ont été éliminées par la carte 3 d'un court message reçu par le terminal et transmis à cette carte. Cette détection peut aisément être obtenue par la comparaison des données du message court tel que contenu dans les éléments tampons évoqués plus haut des moyens 12 de type mémoire du terminal avec celles de ce message qui sont encore présentes après la fin de la prise en compte des commandes dudit message par la carte. Il est donc prévu des moyens logiciels dits de transfert permettant aux moyens de traitement 11 du terminal de récupérer dans la carte les données encore présentes d'un message. Le transfert réalisé est alors exploité pour mettre à jour les données, dites d'image carte, enregistrées dans les moyens 12 de type mémoire du terminal en vue de leur présentation par l'afficheur de ce terminal de manière que l'affichage réalisé au profit de l'utilisateur corresponde toujours à la dernière mise à jour réalisée.

## Revendications

1. Terminal radiotéléphonique (3) à carte d'identification d'abonné (4) qui comporte des premiers moyens (18) de type mémoire exploités par le terminal en tant que mémoire auxiliaire externe, ledit terminal comportant lui-même de seconds moyens (12) de type mémoire et des troisièmes moyens (13) pour transférer des données des premiers moyens aux seconds moyens, ladite carte comportant des quatrièmes moyens (17) lui permettant d'exécuter des commandes de mise à jour, relatives à des données contenues dans les premiers moyens, qui sont transmises sous forme de données par messages courts et par voie radiotéléphonique au terminal, et des cinquièmes moyens pour éliminer les données correspondant aux commandes contenues dans les messages courts reçus lorsque ces commandes ont été exécutées, ledit terminal étant **caractérisé en ce qu'**il comporte en sus des sixièmes moyens pour détecter si des données ont été éliminées d'un court message par la carte d'identification d'abonné et des septièmes moyens pour déclencher les troisièmes moyens pour un transfert de données lorsqu'une détection d'élimination de données a été effectuée par les sixièmes moyens.

2. Terminal, selon la revendication 1, **caractérisé en ce que** les moyens pour détecter si des données ont été éliminées d'un message agissent par comparaison à partir des données du message tel que reçu stocké dans des éléments tampons des moyens de type mémoire du terminal et des données du message après que celui-ci ait été pris en compte par la carte.

## Patentansprüche

1. Funktelefonendgerät (3) mit Teilnehmer-Identifizierungskarte (4), umfassend erste speicherartige Mittel (18), die von dem Endgerät als externer Hilfsspeicher betrieben werden, wobei das Endgerät selber zweite speicherartige Mittel (12) und dritte Mittel (13) zur Übertragung der Daten von den ersten an die zweiten Mittel umfasst, wobei die Karte vierte Mittel (17), die es ihr ermöglichen Aktualisierungsbefehle auszuführen, die sich auf Daten beziehen, die in den ersten Mitteln enthalten sind, die in Form von Daten durch Kurznachrichten und über einen Funkkanal an das Endgerät übertragen werden, und fünfte Mittel zum Entfernen der Daten, die den Befehlen entsprechen, die in den empfangenen Kurznachrichten enthalten sind, wenn diese Befehle ausgeführt wurden, umfasst, wobei das Endgerät **dadurch gekennzeichnet ist, dass** es zudem sechste Mittel, um zu erfassen, ob Daten aus einer Kurznachricht von der Teilnehmer-Identifizierungskarte entfernt wurden, und siebte Mittel, um die dritten Mittel für eine Datenübertragung auszulösen, wenn eine Erfassung einer Datenentfernung durch die sechsten Mittel erfolgt ist, umfasst.

2. Endgerät nach Anspruch 1, **dadurch gekennzeichnet, dass** die Mittel zum Erfassen, ob Daten aus einer Nachricht entfernt wurden, ausgehend von den Daten der Nachricht, wie sie erhalten wurde und in Pufferelementen der speicherartigen Mittel des Endgeräts gespeichert wurde, und von Daten der Nachricht, nachdem diese von der Karte berücksichtigt wurde, durch einen Vergleich wirken.

## Claims

1. A radiotelephone terminal (3) with a subscriber identity card (4), comprising first memory type means (18) operated by the terminal as an external auxiliary memory, said terminal including in turn second memory type means (12) and third means (13) for transferring data from the first means to the second means, said card comprising fourth means (17) enabling it to execute update commands, regarding data contained in the first means, which is transmitted as data by short messages and through a radio channel to the terminal, and fifth means for eliminating the data corresponding to the commands contained in the short messages received when these commands have been executed, said terminal being **characterized in that** it comprises in addition sixth means for detecting whether data has been removed from a short message by the subscriber identity card, and seventh means for initiating the third means for a data transfer when a data removal detection has been performed by the sixth means.

2. The terminal according to claim 1, **characterized in that** the means for detecting whether data has been removed from a message function by comparison from the data of the message as received, stored in buffer elements of the memory type means of the terminal and data of the message after it has been taken into account by the card.
